(19) Europäisches Patentamt

European Patent Office

Office européen des brevets

(11) Publication number: **0 215 661 B1**

(12) **EUROPEAN PATENT SPECIFICATION**

(45) Date of publication of patent specification: **22.04.92**   (51) Int. Cl.5: **H01B 7/36**, G09F 3/10

(21) Application number: **86307087.6**

(22) Date of filing: **15.09.86**

(54) **Wire identification label pad.**

<table>
<tr><td>

(30) Priority: **16.09.85 US 776593**

(43) Date of publication of application:
**25.03.87 Bulletin 87/13**

(45) Publication of the grant of the patent:
**22.04.92 Bulletin 92/17**

(84) Designated Contracting States:
**DE FR GB IT**

(56) References cited:
**FR-A- 1 093 012**
**FR-A- 2 114 467**
**US-A- 2 528 602**

</td><td>

(73) Proprietor: **MINNESOTA MINING AND MANU-FACTURING COMPANY**
**3M Center, P.O. Box 33427**
**St. Paul, Minnesota 55133-3427(US)**

(72) Inventor: **Wrobel, Norbert E. c/o Minnesota Mining and Manuf.**
**2501 Hudson Road P.O. Box 33427**
**St. Paul Minnesota 55133(US)**

(74) Representative: **Baillie, Iain Cameron et al**
**c/o Ladas & Parry, Altheimer Eck 2**
**W-8000 München 2(DE)**

</td></tr>
</table>

Rank Xerox (UK) Business Services

EP 0 215 661 B1

## Description

### Field of the Invention

The present invention relates to labels for marking electrical wires to identify electrical circuits.

### Background of the Invention

Wire identification labels are frequently affixed to electrical wires as they are installed to identify the electrical circuits created. One popular form of wire marker is pressure sensitive adhesive tape printed with indicia and supplied in rolls as disclosed in U. S. Patent No. 4,262,835 or in precut strips as disclosed in U. S. Patent No. 3,896,246. Wire marking labels provided in precut strips have had a nonadhesive backing for each layer of tape as in U. S. Patent No. 3,896,246. The backing, which is disposed of, is thus a significant part of the cost of the product. Moreover, in use the workman normally must grasp the level with one finger contacting the pressure sensitive adhesive surface of the label while removing it from the backing and applying it to the wire, and if his fingers are dirty or greasy the trailing end of the label may not adhere well and it may end up standing up away from the wire as a "flag."

A backing supporting a plurality of bands, for identifying or marking, is illustrated in French Patent No. 1.093.012. There is no teaching of the use of stacks of bands on a single backing with each band being equipped with a release liner to protect the end of the tapes.

There are teachings of a single stack of sheets of pressure sensitive adhesive coated paper such as in USA patent 2,528,602 which shows a stack of sheets on a backing and the backing has adhesive strips to hold the first sheet of the stack onto the backing. Each sheet has a coating of pressure sensitive adhesive and the top sheet has the adhesive covered by a layer of cellophane. When the cellophane is peeled from the top sheet the adhesive is exposed to serve as a cleaning product This patent however does not provide a teaching of the present invention, of multiple stacks of adhesive coated tape strips stacked upon a backing pad.

### Summary of the Invention

The present invention provides a pad of wire identification labels comprising the features of Claim 1. The narrow band of release liner and the pad backing are the only disposable portions of the product. Also, the release liner provides a protection for the adhesive at the end of each strip where it is to be grasped by the workman, and the release liner is removed as the label is wrapped around the wire so that the workman never touches the adhesive surface of the tape.

### The Drawing

In the Drawing:

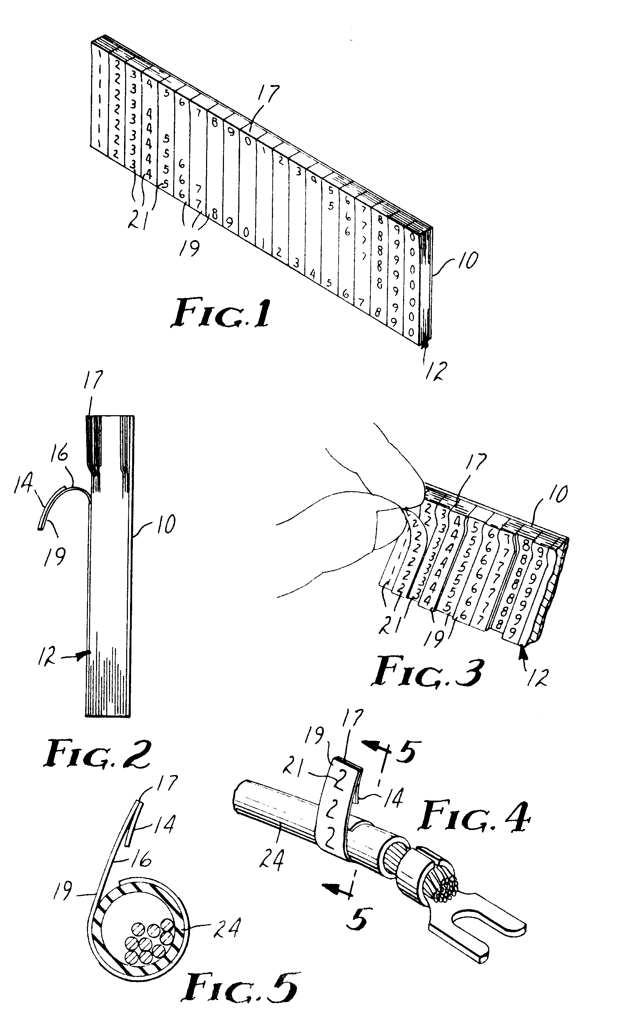

Figure 1 is a perspective view of the front, top and one end of a pad of wire identification labels constructed in accordance with the present invention;
Figure 2 is an end view of the pad of labels with one end of a label bent over for removal;
Figure 3 is a perspective view illustrating the removal of one label from the pad;
Figure 4 is a perspective view of an electrical wire with a label from the pad of Figures 1-3 partially applied and with the release liner still in place at the end of the label; and
Figure 5 is a transverse cross-sectional view taken generally along line 5-5 of Figure 4.

### Descriptions of the Preferred Embodiments

The pad of wire identification labels of the present invention comprises a relatively stiff rectangular pad backing 10 and a multiplicity of rectangular layers of a pressure sensitive adhesive tape 12 on the pad backing. The tape 12 has a flexible opaque backing.

A narrow band of a release liner 14 is similarly adhered to the pressure sensitive adhesive surface 16 of each layer of the tape 12 along one edge 17 thereof. The release liner 14 is preferably stiffer than the tape backing.

The layers of tape 12 are slit into a multiplicity of long, narrow, parallel strips 19. The slits run perpendicular to the edge 17 of each tape layer and the edge parallel thereto, and extend through the layers of tape 12 and release liner 14. Indicia 21 are printed on the layers of tape 12. Each of the narrow strips 19 of tape 12 have a multiplicity of the camo indicia 21 spaced along its length. In the illustrated construction of the indicia on each of the strips 19 of tape 12 are equally spaced along the length of the strip of tape and the adjacent strips contain different indicia. Numerical indicia are illustrated in columnar fashion on each strip of tape 19, although it will be readily apparent that letters may also be used and that the indicia may be turned 90 degrees so that they are arranged in a row on each strip.

In one specific construction of the present invention the pad backing 10 is a piece of polystyrene 15.2 cm (6 inches) long, 3.8 cm (1.5 inches) wide and 0.38 mm (15 mils) thick. The tape 12 has two presently preferred constructions. The first has a 0.02 mm to 0.17 mm (5 to 6.5 mil) polyethylene terephthalate fiber reinforced epoxy film backing with pressure sensitive adhesive on one face comprising a white pigmented cross-linked acrylic adhesive, the indicia 21 are a black flexographic ink printed on the nonadhesive surface of the backing, and a coating acting as a print sealant and a low adhesion backsize is applied over the indicia bearing surface of the backing. The second preferred tape construction has a 0.04 mm (1.6 mil) biaxially oriented, transparent polypropylene film backing, a modified acrylate pressure sensitive adhesive and a white flexographic ink coating the nonadhesive surface of the backing. The indicia 21 are a black flexographic ink printed on the white background ink, a 0.03 mm (1.2 mil) biaxially oriented transparent polypropylene film is bonded to the indicia bearing surface by a synthetic rubber resin adhesive to protect the indicia, and a low adhesion backsize is coated over the protective film. The release liner 14 is a 19.5 kg (43 pound), silicone coated, kraft paper. The layers of tape 12 with release liner 14 applied are preferably laid up on the pad backing 10 and then die cut to the pad backing 10 to form the narrow label strips 19. To prevent the die from cutting into the pad backing 10 (which might then break along the cut lines), a sacrificial layer of material, for example a layer of tape without a release liner, is preferably provided between the pad backing 10 and the first layer of indicia bearing tape 12.

In use, the workman grasps the end of a label strip 19 between his thumb and first finger at the end of the strip having the release liner 14. The end of the strip 19 not bearing the release liner is first contacted against the electrical wire 24 to be marked, and the strip is then wound around the wire. As the end of the strip 19 bearing the release liner 14 approaches the wire 24, the workman bends the end of the strip to cause the release liner 14 which is stiffer than the tape 12 to separate from the tape. The workman then removes the release liner 14 and completes the application of the tape 12 to the wire 24.

## Claims

1. A pad of wire identification labels, comprising:
    a relatively stiff rectangular pad backing (10), and
    a multiplicity of long, narrow rectangular parallel strips (19) of substantially equal lengths of a pressure sensitive adhesive tapes stacked one upon the other, with the adhesive coated surface of the first strip (19) of each stack positioned against said pad backing (10) and in adjacent closely spaced stacks on said pad backing (10), said tape strips (19) each having a flexible opaque backing with a multiplicity of the same indicia (21) printed along the length thereof, the pad being characterized by having a narrow band (14) of a release liner adhered to the pressure sensitive adhesive surface (16) of each tape strip along one end thereof and positioned one above the other to permit the tape strips (19) to be readily grasped and released from the stack.

2. The pad of wire identification labels of claim 1 wherein said bands (14) of release liner are stiffer than said tape backing of said tape strips (19).

3. The pad of wire identification labels of claim 1 wherein said indicia (21) on each of said narrow tape strips (19) are equally spaced along the length of said tape strips (19).

4. The pad of wire identification labels of claim 2 wherein the adjacent stacks of narrow tape strips (19) contain different indicia (21).

## Revendications

1. Bloc d'étiquettes d'identification de fil comprenant :
    un support de bloc (10) rectangulaire et relativement rigide, et
    une pluralité de longues et étroites bandes parallèles rectangulaires (19), de longueurs sensiblement égales, d'un ruban adhésif sensible à la pression, empilées lesunes sur les autres, la surface revêtue d'adhésif de la première bande (19) de chaque pile étant placée contre ledit support de bloc (10), en piles adjacentes juxtaposées sur ledit support de bloc (10), les dites bandes de ruban (19) comprenant chacune un élément porteur opaque flexible avec un grand nombre de la même marque (21) imprimée sur sa longueur, le bloc étant caractérisé en ce qu'un bout étroit (14) d'une doublure anti-adhérence est collé à la surface adhésive sensible à la pression (16) de chaque bande de ruban, le long d'une extrémité de celle-ci, ces doublures étant placées les unes au-dessus des autres pour permettre de saisir facilement les bandes de ruban (19) et de les détacher de la pile.

2. Bloc d'étiquettes d'identification de fil suivant la revendication 1, dans lequel lesdits bouts (14) de doublure anti-adhérence sont plus rigides que ledit élément porteur desdites bandes de ruban (19).

3. Bloc d'étiquettes d'identification de fil suivant la revendication 1, dans lequel lesdites marques (21) sur chacune des étroites bandes de ruban (19) sont espacées de façon égale sur la longueur desdites bandes de ruban (19).

4. Bloc d'étiquettes d'identification de fil suivant la revendication 2, dans lequel les piles adjacentes d'étroites bandes de ruban (19) portent des marques différentes (21).

**Patentansprüche**

1. Block von Drahtkennzeichnungsetiketten mit
   einer relativ steifen, rechteckigen Blockunterage (10) und
   einer Vielzahl von langen, schmalen, rechteckigen parallelen Streifen (19) von im wesentlichen gleicher Länge, die aus einem Haftklebeband bestehen und derart übereinandergestapelt sind, daß die klebstoffüberzogene Fläche des ersten Streifens (19) jedes Stapels an der Blockunterlage (10) anliegt und auf der Blockunterlage (10) einander benachbarte Stapel in deringem Abstand voneinander angeordnet sind, wobei jeder der Bandstreifen (19) einen flexiblen opaken Rücken besitzt, der mit einer Vielzahl von in seiner Längsrichtung gereihten, gleichen Markierungen (21) bedruckt ist, und der Block dadurch gekennzeichnet ist, daß an der Haftkleberfläche (16) jedes Bandstreifens längs eines Endes desselben ein schmales Band (14) aus einer Antihaftauflage angeklebt ist und diese schmalen Bänder übereinander angeordnet sind, damit die Bandstreifen (19) ohne weiteres erfaßt und von dem Stapel abgelöst werden können.

2. Block von Drahtkennzeichnungsetiketten nach Anspruch 1, dadurch gekennzeichnet, daß die Bänder (14) aus der Antihaftauflage steifer sind als der Rücken der Bandstreifen (19).

3. Block von Drahtkennzeichnungsetiketten nach Anspruch 1, dadurch gekennzeichnet, daß auf jedem der schmalen Bandstreifen (19) die Markierungen (21) längs der Bandstreifen (19) in gleichen Abständen voneinander angeordnet sind.

4. Block von Drahtkennzeichnungsetiketten nach Anspruch 2, dadurch gekennzeichnet, daß die einander benachbarten Stapel von schmalen Bandstreifen (19) unterschiedliche Markierungen (21) enthalten.

EP 0 215 661 B1

FIG.1

FIG.2

FIG.3

FIG.4

FIG.5

5